# EUROPEAN PATENT SPECIFICATION

(11) **EP 3 314 202 B1**
(45) Date of publication and mention of the grant of the patent: **28.09.2022**
(21) Application number: 16744907.3
(22) Date of filing: 17.06.2016
(51) Int. Cl.: G01B 11/16, G01M 5/00, G01D 5/353

(54) **METHOD FOR MEASURING THE DISPLACEMENT PROFILE OF BUILDINGS AND SENSOR THEREFOR**
VERFAHREN ZUR MESSUNG DES VERSCHIEBUNGSPROFILS EINES GEBÄUDES UND SENSOR DAFÜR
PROCÉDÉ DE MESURE DU PROFIL DE DÉPLACEMENT D'UN BÂTIMENT ET CAPTEUR CORRESPONDANT

(30) Priority: 24.06.2015 PL 41283815
(43) Date of publication of application: 02.05.2018
(73) Proprietor: SHM SYSTEM SPOLKA Z OGRANICZONA ODPOWIEDZIALNOSCIA SPOLKA KOMANDYTOWA, 30-444 Kraków (PL)
(72) Inventor: BEDNARSKI, Lukasz, PL-25-432 Kielce (PL); SIENKO, Rafal, PL-31-540 Kraków (PL)
(74) Representative: Palka, Grazyna
(86) International application number: PCT/PL2016/000063
(87) International publication number: WO 2016/209099

(56) References cited:
- US-A1- 2008 204 706
- US-A1- 2013 336 612
- US-A1- 2014 312 215

## Description

The present invention provides a method for continuous measurement of displacements profile of building structures and a sensor for implementation of this method for repeated, automatic displacements profile measurements of the medium by means of optical fiber elements, especially in engineering structures, engineering structure elements, geotechnical structures, and an apparatus for implementation of this method. The method and the sensor according to the invention allow for repeated, automatic and maintenance-free determination of a time-varying displacements profile of various types of mediums, in particular ground, structures (eg. bridges) or selected structural elements of buildings (eg. determination of beams deflection shape). The method and the sensor according to the invention allow for performing measurements for both small and large displacements. The method and the sensor according to the invention allow for determination of displacements from both effects of bending and tensile or compressive longitudinal force as well as for automatic compensation of influences caused by temperature varying over the length of the measuring apparatus.

From the US patent application No. US2007 / 0065077 A1 a method is known for determining position and shape, and an apparatus for implementation of this method. The solution is used to determine displacements profile (shape) of a monitored structure, relative position of objects, modal analysis of mechanical systems, as well as minimally invasive surgical techniques and biometric monitoring. The known device is based on optical fiber measurement technology using fiber Bragg gratings arranged in a number of at least one hundred along the individual optical fiber cores. For two-dimensional analysis suitable is an optical fiber with two cores and for three-dimensional with at least three (in the case of three-core fiber uniform distribution of cores around the system axis at 120° is assumed). Device attached to a monitored member (or embedded within it) determines its deformations on the basis of local strain measurements resulting from bending of the monitored member comprising optical fiber cores, so that it is possible, by summing, to reconstruct the actual curvature of the monitored member. Analysis is performed in a discrete way basing on quasi-continuous measurements (fiber Bragg gratings arranged in specific intervals over the length of fiber optic core) and does not account for the effects caused by temperature. It is also not possible to analyze displacements profile caused by both bending and axial force loading.

From US patent application No. US 2010/0215311 A1 a method and apparatus are known for determining the position and shape using the multi-core optical fiber applied primarily for determining the relative position. Presented solution uses three cores arranged uniformly within optical fiber cross section, passing parallel along its length. Inside optical fiber line there are used variety of single strain sensors based on principles of Bragg gratings, Rayleigh scattering or other. The method and apparatus allow with a suitable package of functions for determination of curves, bending surfaces directions and twisting of optical fiber placed freely in a protective outer jacket. This jacket is in no way connected with the optical fiber, and therefore deformations of optical fiber in the form of twisting or unscrewing are not limited along its length. Procedure for determining displacements profiles of optical fiber in three dimensional space (the shape) is performed under the assumption that one end has fixed (known) position, while the other moves freely. From this assumption directly results the fact that displacements of optical fiber are not affected by axial force. Furthermore, the solution allows to determine the shape only in a discrete way (quasi-continuous) over the length of the optical fiber and does not consider compensation of results due to temperature influence.

It is also known from US patent application No. US 2014/0320846 A1 a device is also known for determination of the position and/or shape of the object in three dimensions space, applied in the construction industry, space and medical. Average strains along the length of optical fiber are determined based on registered, total changes of optical length. The device uses multi-core optical fiber: in a cross-section of optical fiber there are three cores intertwined together in the form of helix and arranged in the outer part at 120°, while one core is located in the axis of cross section. Measurement data from the central core are related to the averaged values from external cores. The central core is susceptible to the effects of temperature and changes in the axial force (tension changes), but in contrast to the outer core, does not experience the change in length resulting from the influence of torque around the axis of the profile. This fact allows for measurement compensation due to the influence of either a longitudinal force and temperature, or torque, or all of these above effects. Performing measurement is done using laws of Rayleigh scattering, thus the need of Bragg gratings application is eliminated and it enables for continuous analysis of displacements profile over the entire length of specified measuring segment with high resolution.

Document US20080204706 discloses a system for distributed or dispersed measurement of axial and bending deformations of a structure using at least one threadlike device includes a cylindrical reinforcement supporting, at its periphery, and at least three optical fibers locally parallel to the axis of the reinforcement. In the document US20080204706 fixed optical fibers for measuring core (profile, cylindrical reinforcement) strains and fibers for compensating strains due to the temperature effects are applied. The described solution indicates in its first embodiment that compensating fibers are to be placed freely in grooves/slots made on the perimeter of the profile. The location of the grooves on the perimeter of the profile causes that the free, compensating fibers while arranged inside the grooves will be placed in areas subjected to very large strains, which are caused during bending of the profile. Placing compensating fibers in the most deformable part of the profile will cause defective work of compensating fibers, because it is not technically possible to provide such an excess of compensating optical fiber, so that it would be insensitive to strains caused by bending. These strains are many times greater than thermal strains. In the second embodiment of the invention from the document US20080204706, the grooved sensor profile is replaced with a set of independent fibers. However in this case the document US20080204706 indicates that although the central fiber is a compensating fiber, this fiber cannot be treated as free, because it is subjected to the influence of axial deformations. So the problem of properly arranging fixed optical fibers for measuring core strains and free fibers for compensating strains due to the temperature effects in the measuring device is still unsolved.

Documents US20130336612 and US20140312215 both disclose devices for measuring strains in tubular structures, such as a wellsite in case of the document US20140312215, where the measurement is performed using fixed and floating optical fibers. This devices serve however only for measurements of the strains in the structure they are attached to and they do not solve the problem of a measurement of strains occurring in the sensor itself while the sensor is placed into an examined medium.

All known solutions are based on the assumption that the sensing element, which is a multi-core fiber optic element, is a free element. This means that only one end of the sensing element can be immobilized while the whole sensing element is free. With this assumption, sensing element with optical fibers located inside can freely change its length under the influence of temperature. The known solutions, however, do not include the influence of temperature changes in the case when the sensing element movement is limited, constrained by the medium in which it is placed, and which displacements have to be determined. The medium limiting the movement of a fiber optic sensing element can be eg. soil or concrete. Despite the change in temperature of the medium, fiber optic sensing element cannot freely change its length. Since the measurement signal obtained from the optical fiber sensors is just as sensitive to both the temperature and strains, it precludes in this case correct interpretation of measurement data, and thereby correct determination of the examined medium profile.

Technical issue to be solved is to provide a new method for determining displacements profile of the medium with time-varying temperature, i.e. displacements of building structures, and a sensor for implementation of this method. Such medium is eg. the ground or concrete, which are subjected to daily, monthly and yearly temperature changes. The solution must provide a possibility for determining the temperature effect using the free, unloaded by medium strains, a fiber optic sensor.

Optical fiber sensing elements are optical fibers designed to measure strain and temperature. Within discrete measurements this is optical fiber with applied Bragg grating, within continuous measurements (approximately at every point of the fiber) there are eg. conventional telecommunications optical fibers, which are analyzed using, in particular, the phenomenon of Rayleigh, Raman or Brillouin scattering.

The present invention provides a method for continuous displacements profile measurement of building structures characterized in that the measurement involves a measuring sensor, which is constructed of a core with coupled optical fiber sensing elements for determining the core strains and an optical fiber sensing element for determining temperature, placed freely in an axial channel of the core, making possible to perform measurements in a way that allows for compensation of the influence of ambient temperature. The invention aims at performing continuous displacements profile measurement of building structures through measurement of strains of the measuring sensor, placed in the examined medium. Optical fiber sensing element is responsible for determining the temperature, and due to of its location within the neutral axis of the sensor core cross section, it is not susceptible to strains resulting from sensor bending or twisting. Measurement signals from the optical fiber sensing elements are read using an appropriate well-known electronic device and are converted into displacements profile of examined medium.

The present invention also includes a sensor for measuring displacements profile of buildings structures characterized in that it consists of a core and coupled with it optical fiber sensing elements for determining the core strains, wherein the core in its neutral axis has formed a channel in which optical fiber sensing element for determining temperature is freely placed. Preferably, the core is a rod of a length appropriately chosen to the length of the examined medium, made of deformable material, in particular fiberglass, metal or plastic. Preferably, the channel is filled with a friction reducing substance to minimize friction between the optical fiber sensing element for determining temperature and the walls of the channel. Preferably, the cross-section of the core is a circular. Preferably, the cross-section of the core is a rectangular. Preferably, the cross-section of the core is triangular. Preferably, the core is symmetric about the axes passing through the points of attachment of optical fibers. Measuring sensor has on its surface the geometric elements for gluing optical fiber sensing elements.

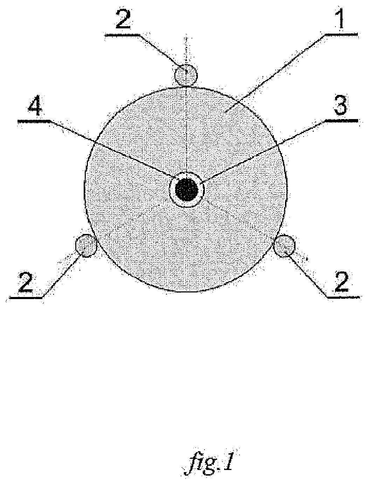

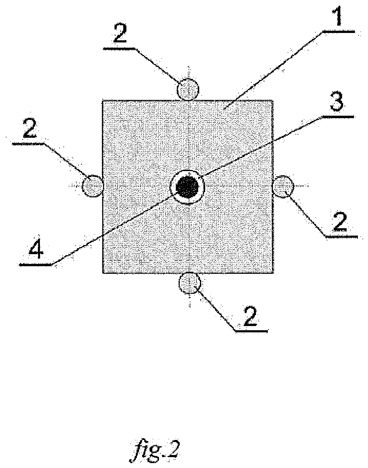

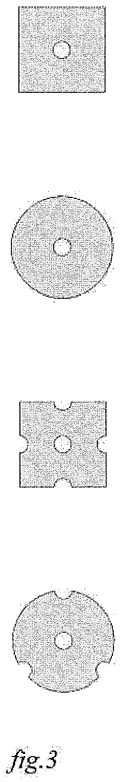

The sensor implementing the method according to the invention is illustrated in an embodiment drawing, in which Fig. 1 shows a sensor having a circular cross-section, Fig. 2 shows a sensor with a square cross-section and Fig. 3 shows a sensor core with different cross-sections.

The measuring sensor consists of a core (1) and, appropriately arranged and coupled with the core (1), optical fiber sensing elements (2) for determining the core (1) strains. Core (1) within its neutral axis has a channel (3), in which optical fiber sensing element for determining temperature (4) is freely placed.

The method according to invention is that it uses the fact that the measuring sensor according to the invention adopts the shape of medium displacements profile, in which it has been placed. By determination of measuring sensor shape the displacements profile shape of examined medium is determined.

## Claims

1. Method for continuous measurement of displacements profile of building structures, using a fiber optic measurement technology, basing on the strain measurement of a measuring sensor placed into an examined medium, **characterized in that** the method comprises
- placing a measuring sensor into the examined medium, wherein the measuring sensor has
- a core (1),
- optical fiber sensing elements (2) for determining the core strains arranged on outer outline of the core (1) cross section, outside of the core material, and coupled with the core (1) and
- an optical fiber sensing element for determining temperature (4);
wherein the measuring sensor has on the outline of its core (1) cross section geometric elements for gluing the optical fiber sensing elements (2);
wherein the core (1) has a channel (3) where the optical fiber sensing element for determining temperature (4) is freely placed, wherein the channel (3) is coaxial with the core and placed in a neutral axis of the core (1);
- measuring of strains of the measuring sensor,
wherein the optical fiber sensing elements (2) determines the core strains and the optical fiber sensing element for determining temperature (4) is responsible for determining the temperature measurement;
- reading signals from the optical fiber sensing elements (2, 4);
- converting the signals into displacements profile of the examined medium making possible performing measurement in a way that allows to compensate thermal environment influences.

2. Sensor for measuring the displacements profile of building structures, using a fiber optic measurement technology, **characterized in that** it consists of
- a core (1),
- optical fiber sensing elements (2) for determining the core strains, arranged on outer outline of the core (1) cross section, outside of the core material, and coupled with the core (1) and
- an optical fiber sensing element for determining temperature (4);
wherein the measuring sensor has on the outline of its core (1) cross section geometric elements for gluing the optical fiber sensing elements (2);
wherein the core (1) has a channel (3) where the optical fiber sensing element for determining temperature (4) is freely placed, wherein the channel (3) is coaxial with the core and placed in a neutral axis of the core (1).

3. Sensor for measuring according to claim 2, **characterized in that** the core (1) is a rod of a length appropriately chosen to the length of the examined medium, made of deformable material, in particular fiberglass, metal or plastic.

4. Sensor for measuring according to any of preceding claims 2 - 3, **characterized in that** the channel (3) is filled with friction reducing substance to minimize friction between the optical fiber sensing element for determining temperature (4) and the walls of the channel (3).

5. Sensor for measuring according to any of preceding claims 2 - 4, **characterized in that** the cross-section of the core (1) is circular.

6. Sensor for measuring according to any of preceding claims 2 -4, **characterized in that** the cross-section of the core (1) is rectangular.

7. Sensor for measuring according to any of preceding claims 2 - 4, **characterized in that** the cross-section of the core (1) is triangular.

8. Sensor for measuring according to any of preceding claims 2 - 7, **characterized in that** the core (1) is symmetric about its neutral axis.

## Patentansprüche

1. Ein Verfahren zur kontinuierlichen Messung des Verschiebungsprofils von baulichen Strukturen mit dem Einsatz faseroptischer Messtechnik, die auf Messung der Dehnung eines im Messmedium platzierten Messsensors basiert, **dadurch gekennzeichnet, dass** das Verfahren umfasst:
- Platzieren eines Messsensors in dem gemessenen Medium; wobei der Messsensor folgende Teile hat:
- einen Kern (1),
- Lichtleitfaser-Sensorelemente (2) zur Bestimmung der Kerndehnung, angeordnet an der Außenkontur des Querschnitts des Kerns (1), außerhalb des Kernmaterials und mit dem Kern (1) gekoppelt und
- ein Lichtleitfaser-Sensorelement zur Bestimmung der Temperatur (4);
wobei der Messsensor an der Außenkontur des Querschnitts seines Kerns (1) geometrische Elemente aufweist, an denen die Lichtleitfaser-Sensorelemente (2) aufgeklebt werden; wobei der Kern (1) mit einem Kanal (3) versehen ist, in dem das Lichtleitfaser-Sensorelement zur Bestimmung der Temperatur (4) verlegt wird, wobei der Kanal (3) koaxial mit dem Kern und in der neutralen Achse des Kerns (1) angeordnet ist;
- Messung der Dehnung des Messsensors, wobei das Lichtleitfaser-Sensorelement (2) die Kerndehnung ermittelt und das Lichtleitfaser-Sensorelement zur Bestimmung der Temperatur (4) für die Temperaturmessung zuständig ist;
- Auslesen von Signalen von den Lichtleitfaser-Sensorelementen (2, 4);
- Umwandlung der Signale in ein Verschiebungsprofil des untersuchten Mediums, was eine Messung ermöglicht, die den Ausgleich von thermischen Umgebungseinflüssen erlaubt.

2. Ein Sensor zur Ermittlung des Verschiebungsprofils von baulichen Strukturen, mit Einsatz der Lichtleitfaser-Messtechnik, **dadurch gekennzeichnet, dass** er folgende Teile umfasst:
- einen Kern (1),
- Lichtleitfaser-Sensorelemente (2) zur Bestimmung der Kerndehnung, angeordnet an der Außenkontur des Querschnitts durch den Kern (1), außerhalb des Kernmaterials und mit dem Kern (1) gekoppelt und
- ein Lichtleitfaser-Sensorelement zur Bestimmung der Temperatur (4); wobei der Messsensor an der Außenkontur des Querschnitts seines Kerns (1) geometrische Elemente aufweist, an denen die Lichtleitfaser-Sensorelemente (2) aufgeklebt werden;
wobei der Kern (1) mit einem Kanal (3) versehen ist, in dem das Lichtleitfaser-Sensorelement zur Bestimmung der Temperatur (4) verlegt wird, wobei der Kanal (3) koaxial mit dem Kern und in der neutralen Achse des Kerns (1) angeordnet ist.

3. Ein Sensor für die Messungen gemäß Anspruch 2, **dadurch gekennzeichnet, dass** der Kern (1) einen Stab von passend zu der Länge des untersuchten Mediums ausgewählter Länge darstellt, der aus einem verformbaren Material, insbesondere aus Glasfasern, Metall oder Kunststoff hergestellt ist.

4. Ein Sensor für die Messungen gemäß einem der vorgenannten Ansprüche 2-3, **dadurch gekennzeichnet, dass** der Kanal (3) mit einem reibungsmindernden Stoff gefüllt ist, um die Reibung zwischen dem Lichtleitfaser-Sensorelement zur Bestimmung der Temperatur (4) und den Wänden des Kanals (3) zu minimieren.

5. Ein Sensor für die Messungen gemäß den vorgenannten Ansprüchen 2-4, **dadurch gekennzeichnet, dass** der Querschnitt des Kerns (1) kreisförmig ist.

6. Ein Sensor für die Messungen gemäß den vorgenannten Ansprüchen 2-4, **dadurch gekennzeichnet, dass** der Querschnitt des Kerns (1) rechteckig ist.

7. Ein Sensor für die Messungen gemäß den vorgenannten Ansprüchen 2-4, **dadurch gekennzeichnet, dass** der Querschnitt des Kerns (1) dreieckig ist.

8. Ein Sensor für die Messungen gemäß den vorgenannten Ansprüchen 2-7, **dadurch gekennzeichnet, dass** der Kern (1) symmetrisch um seine neutrale Achse ist.

## Revendications

1. Procédé de mesure en continu du profil des déplacements des structures de bâtiments, utilisant une technologie de mesure par fibre optique, basée sur la mesure de la déformation d'un capteur de mesure placé dans un milieu examiné, **caractérisé en ce que** le procédé comprend
- placer un capteur de mesure dans le milieu examiné, lequel le capteur de mesure ayant
- un noyau (1),
- des éléments (2) de détection à fibre optique pour déterminer les contraintes du noyau, disposés sur le contour extérieur de la section transversale du noyau (1), à l'extérieur du matériau du noyau, et couplés avec le noyau (1) et
- un élément de détection à fibre optique pour déterminer la température (4);
lequel capteur de mesure présentant sur le contour de son noyau (1) des éléments géométriques de section transversale pour le collage des éléments (2) de détection à fibre optique;
lequel noyau (1) ayant un canal (3) où l'élément de détection à fibre optique pour déterminer la température (4) est placé librement, lequel canal (3) etant coaxial avec le noyau et placé dans un axe neutre du noyau (1);
- mesure des déformations du capteur de mesure,
lequel l'élément (2) de détection à fibre optique déterminant les contraintes du noyau et lequel l'élément de détection à fibre optique pour déterminer la température (4) etant responsable de la détermination de la mesure de la température;
- lire les signaux provenant des éléments (2, 4) de détection à fibre optique;
- convertir les signaux en profil de déplacement du milieu examiné, ce qui permet d'effectuer la mesure de manière à compenser les influences de l'environnement thermique.

2. Capteur pour la mesure du profil des déplacements des structures de bâtiments, utilisant une technologie de mesure par fibre optique, **caractérisé en ce qu'il** consiste en
- un noyau (1),
- des éléments (2) de détection à fibre optique pour déterminer les contraintes du noyau, disposés sur le contour extérieur de la section transversale du noyau (1), à l'extérieur du matériau du noyau, et couplés avec le noyau (1) et
- un élément de détection à fibre optique pour déterminer la température (4) ; lequel capteur de mesure présentant sur le contour de son noyau (1) des éléments géométriques de section transversale pour le collage des éléments (2) de détection à fibre optique ;
lequel noyau (1) ayant un canal (3) où l'élément de détection à fibre optique pour déterminer la température (4) est placé librement, lequel canal (3) etant coaxial avec le noyau et placé dans un axe neutre du noyau (1) ;

3. Capteur de mesure selon la revendication 2, **caractérisé en ce que** le noyau (1) est une tige d'une longueur choisie de manière appropriée à la longueur du milieu examiné, faite d'un matériau déformable, en particulier de la fibre de verre, du métal ou du plastique.

4. Capteur de mesure selon l'une quelconque des revendications précédentes 2 - 3, **caractérisé en ce que** le canal (3) est rempli d'une substance réduisant la friction pour minimiser la friction entre l'élément de détection à fibre optique pour déterminer la température (4) et les parois du canal (3).

5. Capteur de mesure selon l'une quelconque des revendications précédentes 2 - 4, **caractérisé en ce que** la section transversale du noyau (1) est circulaire.

6. Capteur de mesure selon l'une quelconque des revendications précédentes 2 - 4, **caractérisé en ce que** la section transversale du noyau (1) est rectangulaire.

7. Capteur de mesure selon l'une quelconque des revendications précédentes 2 - 4, **caractérisé en ce que** la section transversale du noyau (1) est triangulaire.

8. Capteur de mesure selon l'une quelconque des revendications précédentes 2 - 7, **caractérisé en ce que** le noyau (1) est symétrique par rapport à son axe neutre.
